Europäisches Patentamt

European Patent Office

Office européen des brevets

(19)

(11) **EP 1 342 051 B1**

(12) **EUROPÄISCHE PATENTSCHRIFT**

(45) Veröffentlichungstag und Bekanntmachung des Hinweises auf die Patenterteilung:
**19.10.2005   Patentblatt 2005/42**

(51) Int Cl.$^7$: **G01B 21/04**

(86) Internationale Anmeldenummer:
**PCT/EP2001/010089**

(21) Anmeldenummer: 01985749.9

(22) Anmeldetag: **31.08.2001**

(87) Internationale Veröffentlichungsnummer:
**WO 2002/027269 (04.04.2002 Gazette 2002/14)**

(54) **KALIBRIERUNG EINES MESSENDEN SENSORS AUF EINEM KOORDINATENMESSGERÄT MIT EINER KUGEL, DEREN MITTELPUNKT BEKANNT IST**

CALIBRATION OF A MEASURING SENSOR ON A COORDINATE MEASURING MACHINE WITH A BALL, WHOSE CENTER IS KNOWN

CALIBRAGE D'UN CAPTEUR DE MESURE D'UN APPAREIL DE MESURE DE COORDONNEES AU MOYEN D'UNE BOULE, DONT LE CENTRE EST CONNU

(84) Benannte Vertragsstaaten:
**DE FR GB IT**

(30) Priorität: **28.09.2000   DE 10048096
28.09.2000   DE 10048095**

(43) Veröffentlichungstag der Anmeldung:
**10.09.2003   Patentblatt 2003/37**

(73) Patentinhaber: **Carl Zeiss Industrielle Messtechnik GmbH
73447 Oberkochen (DE)**

(72) Erfinder: **LOTZE, Werner
01309 Dresden (DE)**

(74) Vertreter: **Henckell, Carsten
Carl Zeiss
Patentabteilung
73446 Oberkochen (DE)**

(56) Entgegenhaltungen:
**DE-A- 19 618 283**

## Beschreibung

Die Anmeldung betrifft ein Verfahren zum Kalibrieren eines messenden Sensors auf einem Koordinatenmeßgerät sowie ein entsprechendes Koordinatenmeßgerät.

Ein derartiges Verfahren ist bereits aus der DE 196 18 283 A1 bekannt. Hierin ist ein Koordinatenmeßgerät mit einem zweidimensional arbeitenden optischen Sensor beschrieben. Der optische Sensor ist hierbei über eine Dreh-Schwenkeinheit mit dem Meßarm des Koordinatenmeßgerätes verbunden, über die der Sensor in zwei aufeinander senkrecht stehenden Drehachsen verdreht werden kann. Der Sensor selber umfaßt eine Beleuchtungseinheit, die einen Laserstrahl linienförmig aufgefächert auf ein zu vermessendes Werkstück projiziert sowie eine Videokamera, die das linienförmige Muster nach dem Lasertriangulationsprinzip auswertet.

Damit die von der Videokamera aufgenommenen Meßwerte in das Maschinenkoordinatensystem transformiert werden können, wird sowohl eine Rotationsmatrix bestimmt, die die Rotation des Sensorkoordinatensystem in das Maschinenkoordinatensystem beschreibt, sowie ein Vektor bestimmt, der die Ablage des Ursprunges des Sensorkoordinatensystems gegenüber einem im Maschinenkoordinatensystem bekannten Aufhängepunkt der Dreh-Schwenkeinheit beschreibt. Über die Rotationsmatrix und den Ablagevektor kann dann jeder vom optischen Sensor gemessene Punkt in das Maschinenkoordinatensystem transformiert werden.

Um die Rotationsmatrix und den Ablagevektor zu bestimmen wird ein würfelförmiger Prüfkörper vorgesehen, der zuvor durch einen mechanischen Tastkopf exakt in das Maschinenkoordinatensystem eingemessen wurde. Der Prüfkörper weist zentral auf den abzutastenden Flächen eine Bohrung auf. Die Z-Achse wird beim optischen Sensor hierbei willkürlich als optische Achse der Videokamera definiert. Um die Ausrichtung der z-Achse des Sensorkoordinatensystems zu bestimmen, wird der optische Sensor näherungsweise entlang dieser Z- Achse verfahren und zwar so, daß in den unterschiedlichen Stellungen die Bohrung immer in die Mitte des Bildes geholt wird. Analog wird für die y-Achse des Sensorkoordinatensystem vorgegangen. Hierdurch wird die Ausrichtung der z- Achse und der y-Achse und mithin auch der x-Achse genau definiert und es können folglich die Parameter der Rotationsmatrix zur Rotation des Sensorkoordinatensystem in das Maschinenkoordinatensystem wie auch die Parameter des Vektors, der die Ablage des Ursprunges des Sensorkoordinatensystems beschreibt, berechnet werden.

Die Besonderheit des gezeigten Verfahrens ist hierbei darin zu sehen, daß das Kalibrieren des Sensors relativ zeitaufwendig ist und ein relativ komplizierter und damit fehleranfälliger Prüfkörper erforderlich ist.

Des weiteren zeigt das US-Patent 4,875,177 ein anderes Verfahren oben genannter Art. Hierin ist ein Koordinatenmeßgerät mit einem eindimensional messenden optischen Sensor beschrieben. Der optische Sensor ist hierbei über eine Dreh-Schwenkeinheit mit dem Meßarm des Koordinatenmeßgerätes verbunden, über die der Sensor in zwei aufeinander senkrecht stehenden Drehachsen verdreht werden kann. Der Sensor selber arbeitet ebenfalls nach dem Lasertriangulationsprizip und umfaßt eine Beleuchtungseinheit, die einen Laserstrahl als Leuchtpunkt auf ein zu vermessendes Werkstück projiziert sowie eine Beobachtungseinheit, die den Leuchtpunkt nach dem Lasertriangulationsprinzip auswertet. Um die im Sensorkoordinatensystem gemessenen Meßwerte des Sensors in das Maschinenkoordinatensystem zu transformieren, wird eine Rotationsmatrix bestimmt. Hierzu wird eine Kalibrierkugel mit bekanntem Durchmesser an mehreren unterschiedlichen Punkten angetastet und zwar jeweils an den Rändern des linienförmigen Meßbereiches. Aus den am einen Ende des Meßbereiches gemessenen Meßwerten, wie auch aus den am anderen Ende des Meßbereiches gemessenen Meßwerten wird jeweils der Mittelpunkt der Kalibrierkugel ermittelt. Hierbei ergeben sich wegen des nicht ausgerichteten Sensors und dessen Meßungenauigkeit an seinen Rändern des Meßbereiches zwei unterschiedliche Mittelpunkte. Die Verbindung dieser beiden Mittelpunkte ist parallel zur Meßrichtung des Sensors, so daß aus dieser Geraden die Koeffizienten der Rotationsmatrix bestimmt werden können.

Die Besonderheit dieses Verfahrens ist hierbei darin zu sehen, daß es relativ ungenau ist. Es wird nämlich ein nicht korrigierter Lasertriangulationstaster verwendet, so daß mit dem Sensor nicht der exakte Mittelpunkt der Kalibrierkugel ermittelt wird. Damit ist jedoch insbesondere die Ermittlung der exakten Ablage des Sensorkoordinatensystems gegenüber einem Punkt im Maschinenkoordinatensystem nicht möglich, so daß eine für genaue Messungen unerläßliche exakte Transformation eines im Sensorkoordinatensystem gemessenen Meßpunktes in das Maschinenkoordinatensystem nicht möglich ist.

Aufgabe ist es hiervon ausgehend ein einfach durchzuführendes und präzises Kalibrierverfahren, sowie ein entsprechendes Koordinatenmeßgerät zur Durchführung des Verfahrens vorzustellen.

Die Aufgabe wird gelöst durch die Merkmale des unabhängigen Anspruches 1 und ein entsprechendes Koordinatenmeßgerät gemäß unabhängigem Anspruch 8.

Lösungsgemäß werden folgende Verfahrensschritte zur Durchführung des Kalibrierverfahrens durchgeführt:

- Bereitstellen einer Kalibrierkugel mit bekanntem Radius im Meßraum des Koordinatenmeßgerätes und bestimmen des Mittelpunktes der Kalibrierkugel (12) im Maschinenkoordinatensystem ($X_M, Y_M, Z_M$).
- messen von Punkten ($\mathbf{p}_{O,i}$) auf der Oberfläche der Kalibrierkugel (12) mit dem zu kalibrierenden Sensor (9), wobei in wenigstens einer vom Sensor meßbaren Dimension (u,v) Meßwerte ($s'_i$) über wenigstens weite Teile des Meßbereiches aufgenommen werden.

- ermitteln von Parametern eines ersten Parameterfeldes ($M_S$), das die Transformation des Sensorkoordinatensystems (u,v,w) in das Maschinenkoordinatensystem ($X_M, Y_M, Z_M$) beschreibt sowie eines zweiten Parameterfeldes ($p_S$), das die Ablage des Sensorkoordinatensystems (u,v,w) gegenüber einem Punkt (AB) im Maschinenkoordinatensystem ($X_M, Y_M, Z_M$) beschreibt, aus den Meßwerten ($s'_i$) für den messenden Sensor unter Berücksichtigung daß der Mittelpunkt ($p_K$) der Kalibrierkugel (12) und der Radius ($r_K$) der Kalibrierkugel (12) als bekannt vorausgesetzt wird.

Hierdurch ergibt sich der besondere Vorteil, daß die Kalibrierung einerseits in relativ kurzer Zeit durchgeführt werden kann, weil nur weitgehend beliebige Meßpunkte auf der Kugeloberfläche gemessen werden müssen und hieraus unmittelbar die Parameter der Parameterfelder berechnet werden können. Da der Mittelpunkt der Kalibrierkugel in dem erfindungsgemäßen Kalibrierverfahren vor der eigentlichen Kalibrierung bestimmt wird und in der Kalibrierung dann als bekannt vorausgesetzt wird, ist außerdem eine hohe Präzision gewährleistet.

Die Bestimmung des Mittelpunktes der Kalibrierkugel kann hierbei auf unterschiedliche Weise erfolgen. Beispielsweise kann am Meßarm des Koordinatenmeßgerätes, an dem dann der zu kalibrierende Sensor befestigt wird, ein sogenannter schaltender Tastkopf befestigt werden, der bei der Berührung des Taststiftes an einem Werkstück ein Signal auslöst. Mit dem Sensor können dann an der Kalibrierkugel eine Vielzahl von Meßpunkten gemessen werden und aus den Meßpunkten kann dann der Mittelpunkt der Kalibrierkugel berechnet werden. Alternativ ließe sich jedoch auch denken, daß die Kalibrierkugel von einer vom Koordinatenmeßgerät unabhängigen Meßeinrichtung eingemessen wird, z.B. von einem zusätzlichen, handbedienten Koordinatenmeßgerät mit dem dann die Kalibrierkugel angetastet und hieraus der Mittelpunkt der Kalibrierkugel errechnet wird.

Als zu kalibrierender Sensor könnte hierbei prinzipiell jeder in wenigstens einer Dimension messende Sensor verwendet werden. Beispielsweise könnte ein berührend arbeitender messender Tastkopf verwendet werden, der über entsprechende Wegaufnehmer die Auslenkung eines Taststiftes gegenüber dem Tastkopf in den drei Koordinatenrichtungen mißt Es kann jedoch genauso ein in einer oder zwei Dimensionen messender optischer Triangulationstaster verwendet werden. Entscheidend ist nur, daß der Sensor bereits intern korrigiert ist, d.h. daß er Meßwerte im sensoreigenen Koordinatensystem liefert.

Auch die Mechanik des Koordinatenmeßgerätes, mit der der zu kalibrierende Sensor in den drei Koordinatenrichtungen verfahren wird, kann vollkommen unterschiedlich ausgestaltet sein und beispielsweise als Ständermechanik ausgeführt sein, wie dies das Ausführungsbeispiel der Figurenbeschreibung zeigt oder als Portalmechanik, oder als Brückenmechanik.

Bei der Steuer- und Auswerteeinheit, mit der die Meßabläufe gesteuert werden und die Meßdaten zur Durchführung der Kalibrierung ausgewertet werden handelt es sich üblicherweise um einen Auswerterechner, der über einen Bus mit der Steuerung des Koordinatenmeßgerätes verbunden ist. In neuerer Zeit gibt es auch Steuer- und Auswerteeinheiten, bei denen die Steuerung, die weitgehend in Echtzeit mit den Antrieben und den Meßwertaufnehmern des Koordinatenmeßgerätes interagieren muß mit in den Auswerterechner integriert ist.

Bei dem ersten Parameterfeld, das die Transformation des Sensorkoordinatensystems in das Maschinenkoordinatensystem angibt handelt es sich in der Regel um eine dreizeilige Matrix, die auch als Sensormatrix bezeichnet wird. Die Anzahl der Spalten variiert mit der Anzahl der mit dem Sensor meßbaren Dimensionen.

Bei dem zweiten Parameterfeld, das die Ablage des Sensorkoordinatensystems (u,v,w) gegenüber einem Punkt (AB) im Maschinenkoordinatensystem ($X_M, Y_M, Z_M$) beschreibt, handelt es sich um einen Vektor, wobei der Punkt (AB) ein bekannter Punkt im Maschinenkoordinatensystem ($X_M, Y_M, Z_M$) sein muß, gegenüber dem der Ursprung des Sensorkoordinatensystems (u,v,w) eine feste räumliche Lage hat. Dieser Punkt muß deshalb irgendwo im Meßarm definiert sein, an dem der Sensor befestigt ist. Natürlich ändert dieser Punkt (AB) seine Lage gegenüber dem Ursprung des Maschinenkoordinatensystems, wenn die Mechanik des Koordinatenmeßgerätes in den drei Koordinatenrichtungen verstellt wird. Als geeigneter Punkt könnte beispielsweise die sogenannte Einbaulage einer Dreh-Schwenkeinheit verwendet werden, die die Lage der Drehachse des dem Meßarm am nächsten liegenden Drehgelenkes beschreibt. Genauso gut könnte jedoch ein beliebiger anderer Punkt im Meßarm definiert werden.

Die Forderung, daß die Meßwerte wenigstens in einer Dimension über weite Teile des Meßbereiches aufgenommen werden müssen ergibt sich daraus, daß das erste Parameterfeld die Transformation des Sensorkoordinatensystems in das Maschinenkoordinatensystem beschreibt. Es muß deshalb sehr genau die Ausrichtung der Achsen des Sensorkoordinatensystems bestimmt werden. Dies ist dann der Fall, wenn die Meßwerte über weite Teile des Meßbereiches verteilt sind.

Eine Minimierung der Meßfehler ergibt sich, wenn die Meßwerte gleichmäßig über den gesamten Meßbereich verteilt sind.

Weitere Vorteile und Weiterbildungen der Erfindung ergeben sich aus der nachfolgenden Figurenbeschreibung. Hierin zeigen:

Figur 1: ein Koordinatenmeßgerät mit einem optischen zweidimensional messenden Sensor (9), der über eine Dreh-Schwenkeinheit (13) mit drei Drehgelenken am Meßarm (4) des Koordinatenmeßgerätes befestigt ist

Figur 2: optischer Sensor (9) gemäß Figur 1 beim Abtasten einer Kalibrierkugel (12)

Figur 3: Prinzipskizze des optischen Sensor (9) gemäß Figur 1 in der Seitenansicht

Figur 4: eine Skizze zur Verdeutlichung der Lage des Sensorkoordinatensystems (u,v,w) des optischen Sensors (9)

Figur 5: eine Skizze zur Verdeutlichung des Verfahrens der Aufnahme der Korrekturwerte

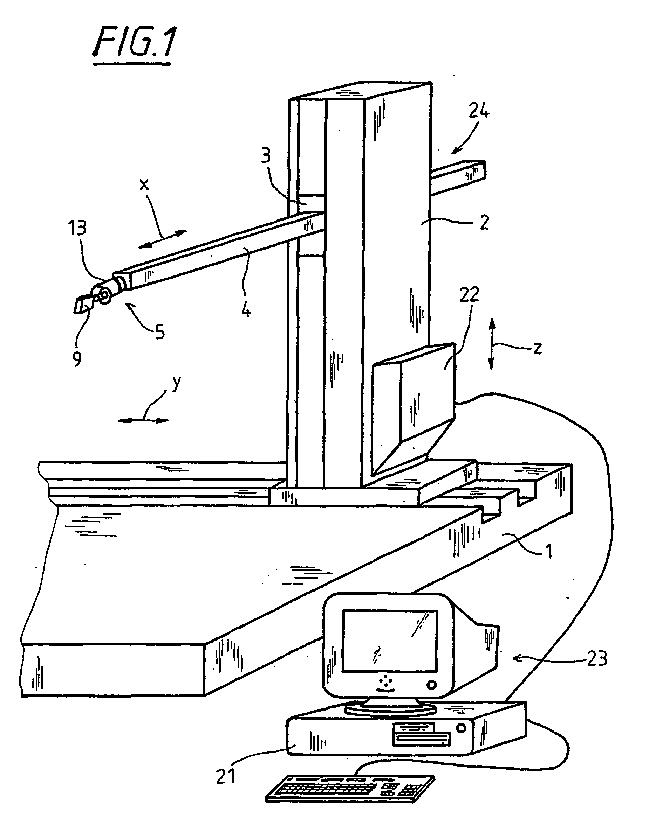

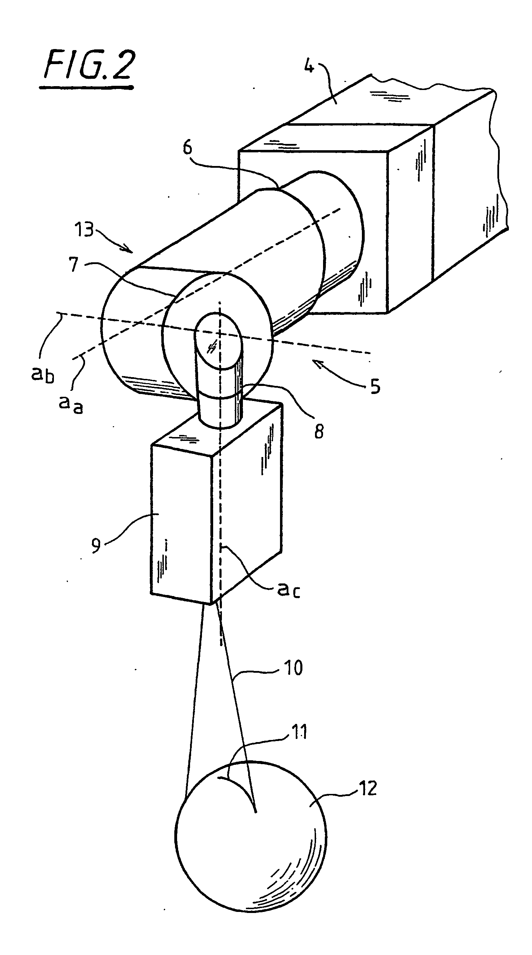

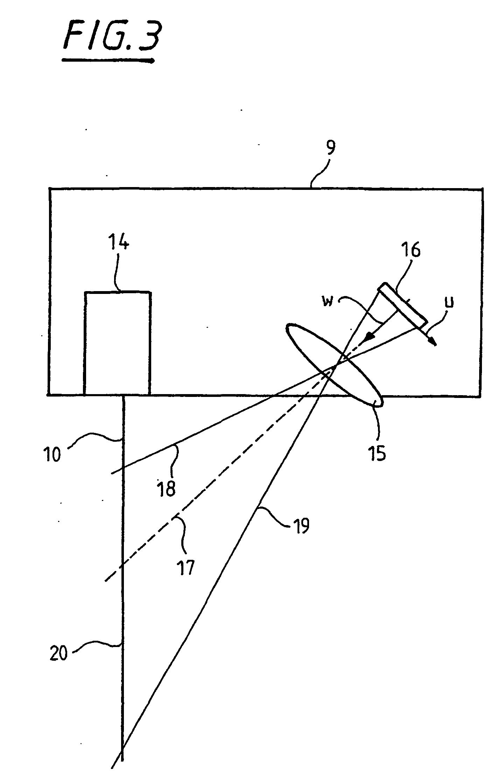

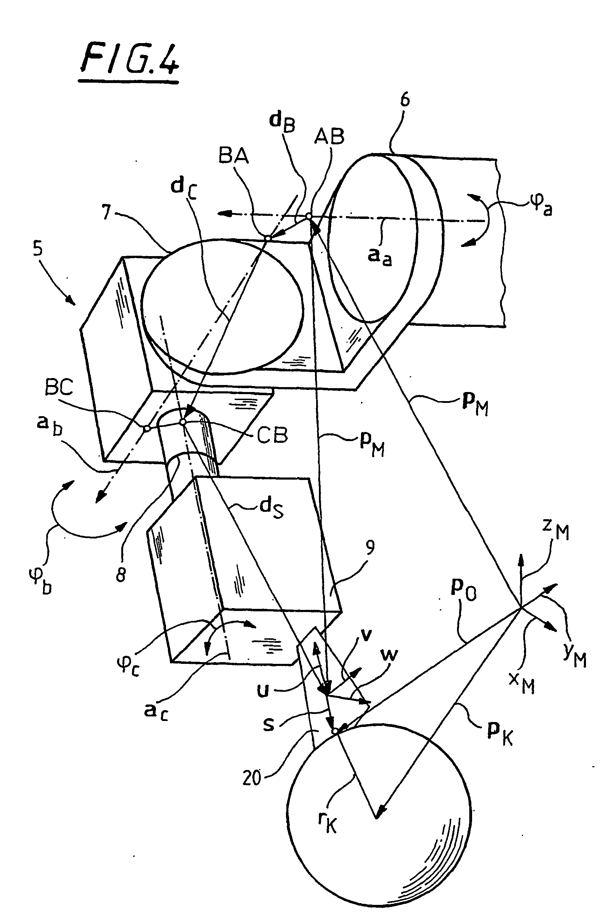

Figur 1 zeigt ein Koordinatenmeßgerät in sogenannter Ständerbauweise in einer perspektivischen Ansicht mit einer Sensorik (5) die einen optischen zweidimensional messenden Sensor (9) sowie eine Dreh-Schwenkeinheit (13) mit drei Drehgelenken (6,7,8) umfaßt, wie dies noch weiter unten im Zusammenhang mit den Figuren 2 und 3 erläutert werden wird.

Das Koordinatenmeßgerät umfaßt hierbei eine Mechanik (24) über die die Sensorik in den Koordinatenrichtungen (X,Y,Z) verstellt werden kann. Diese Mechanik (24) umfaßt einen Ständer (2), der über Führungen in der mit dem Pfeil (y) bezeichneten Richtung auf dem Meßtisch (1) verfahren werden kann. An dem Ständer (2) ist in der mit dem Pfeil (z) bezeichneten Richtung ein Kreuzschieber (3) verschieblich gelagert, an dem wiederum in der mit dem Pfeil (x) beschriebenen Richtung der Meßarm (4) verschieblich gelagert ist.

Den einzelnen Führungen sind hierbei Maßstäbe mit entsprechenden Ableseköpfen zugeordnet, so daß in allen drei Koordinatenrichtungen (x,y,z) die jeweilige Position der Sensorik (5) bestimmt werden kann. Außerdem sind hier nicht näher zu sehende Antriebe vorgesehen, über die der Ständer (2), der Kreuzschieber (3) und der Meßarm (4) in den Koordinatenrichtungen (X,Y,Z) verfahren werden können. Als Steuer- und Auswerteeinheit (23) weist das Koordinatenmeßgerät hier beispielhaft einen Auswerterechner (21) auf, der der Erstellung von Meßabläufen und zur Auswertung der Meßdaten dient, sowie eine Steuerung (22) auf, die der Ansteuerung der Antriebe und der Aufnahme der Meßdaten dient Auswerterechner (21) und Steuerung (22) der Steuer- und Auswerteeinheit (23) sind die über einen Bus miteinander verbunden. In der Steuer- und Auswerteeinheit (23) werden insbesondere auch die ganzen nachfolgend beschriebenen Verfahren durchgeführt.

Mit der Sensorik (5) können hierbei Meßpunkte auf einem in Figur 1 nicht näher gezeigten Werkstück aufgenommen werden, wie dies im Zusammenhang mit Figur 2 näher erläutert werden soll, die die Sensorik (5) ebenfalls in einer perspektivischen Darstellung zeigt. Wie aus Figur 2 zu sehen ist, ist der Sensor (9) über eine Dreh-Schwenkeinheit (13) am Meßarm (4) des Koordinatenmeßgerätes befestigt. Die Dreh-Schwenkeinheit (13) weist hierbei drei Drehgelenke (6,7,8) auf, die jeweils drei Drehachsen $(a_a,a_b,3_c)$ definieren, wobei die Drehachse $(a_b)$ des Drehgelenkes (7) senkrecht auf die Drehachse $(a_a)$ des Drehgelenkes (6) steht und die Drehachse $(a_c)$ des Drehgelenkes (8) wiederum senkrecht auf die Drehachse $(a_b)$ des Drehgelenkes (7) steht. Somit kann der Sensor (9) beliebig im Raum verstellt werden. Die in diesem Ausführungsbeispiel verwendete Dreh-Schwenkeinheit (13) ist eigentlich eine Dreh-Schwenkeinheit mit nur zwei Drehgelenken (6,7) wie sie in dem US-Patent 4,888,877 und dem korrespondierenden Europäischen Patent 0 317 967 gezeigt ist. Auf das US-Patent 4,888,877 und das korrespondierende Europäische Patent 0 317 967 B1 wird hierbei ausdrücklich bezug genommen. Über die hieran befindliche Tastkopfwechseleinrichtung ist das dritte Drehgelenk (8) mit dem optischen Sensor (9) aufgenommen. Der Aufbau des Drehgelenkes (8) ist vollkommen analog zum Aufbau der entsprechenden Drehgelenke (6 und 7). Dies hat einen besonderen Vorteil. Dreh-Schwenkeinheiten mit zwei Drehgelenken sind bei heutigen Koordinatenmeßgeräten bereits weit verbreitet. Damit macht es wenig Sinn zusätzlich eine Dreh-Schwenkeinheit mit drei Drehgelenken vorzusehen, weil dies unnötig Kosten verursacht. Zum einen müßte zusätzlich eine Dreh-Schwenkeinheit mit drei Drehgelenken gefertigt werden. Zum anderen müßte für jedes der drei Drehgelenke wieder, soweit vorhanden, die im US-Patent 4,888,877 und dem korrespondierenden Europäischen Patent 0 317 967 beschriebenen Korrekturwerte aufgenommen werden.

Natürlich kann die Dreh-Schwenkeinheit (13) jedoch auch eine Einheit sein, die drei Drehgelenke (6,7,8) umfaßt, wenn dies gewünscht ist. Außerdem kann die Dreh-Schwenkeinheit natürlich auch eine rastende Dreh-Schwenkeinheit sein, bei der diverse Drehstellungen als Raste ausgebildet sind.

Der optische Sensor (9) soll anhand von Figuren 2 und 3 beschrieben werden. Figur 3 zeigt hierbei eine rein schematische Zeichnung des Sensors (9) in der Seitenansicht. Der Sensor (9) ist in diesem Ausführungsbeispiel als zweidimensional arbeitender optischer Lasertriangulationstaster ausgebildet. Dazu weist der Sensor (9) eine Beleuchtungseinheit (14) auf, die einen Laserstrahl linienförmig in einen Lichtfächer (10) auffächert, wie dies aus Figur 2 besonders gut zu sehen ist. Dazu kann die Beleuchtungseinheit (14) einen Laser sowie ein rotierendes Spiegelprisma umfassen, das den Laserstrahl linienförmig in einen Lichtfächer (10) auffächert. Wenn der Lichtfächer (10) dann auf der Oberfläche eines Werkstückes, hier einer Kalibrierkugel (12), auftrifft, und von dieser reflektiert wird, ergibt sich ein linienförmiges Muster (11), wie dies insbesondere Figur 2 zeigt. Dieses linienförmige Muster (11) wird nunmehr von einer Videokamera, von der hier nur rein schematisch das Objektiv (15) und der CCD-Chip (16) gezeigt ist, beobachtet und zwar derart, daß die optische Achse (17) der Videokamera mit dem Lichtfächer (10) einen Winkel einschließt. Aus dem aufgenommenen Bild des linienförmigen Musters (11) läßt sich nun für alle Meßpunkte entlang des linienförmigen Musters (11) der Abstand vom Werkstück, hier der Kalibrierkugel (12), berechnen. Durch das Sehfeld der Videokamera wird mithin der Meßbereich des optischen Sensors begrenzt, der für diesen speziellen messenden Sensor als zweidimensionales Meßfeld (20) ausgebildet ist.

Der optische Sensor (9) ist durch rechentechnische Mittel nunmehr so in das Koordinatenmeßgerät einzubinden, daß er unabhängig von seiner Position und Orientierung die Bestimmung von Raumpunkten und Formelementen für die zu messenden Merkmale an einem Werkstück liefert.

Dies wird erreicht, indem die Sensorsignale, die im Sensorkoordinatensystem (u,v,w) ermittelt werden, mit Hilfe von mehrparametrigeri Gleichungen in das Maschinenkoordinatensystem $(X_M,Y_M,Z_M)$ des Koordinatenmeßgerätes konvertiert und transformiert werden.

Folgend wird vorausgesetzt, daß die interne Kalibrierung des Sensors hinreichend genau ausgeführt ist und der Sensor (9) für ein zu messendes Werkstück kartesische Sensorkoordinaten $(s'=\{u,v,w\})$ liefert, wie dies anhand von Figur 4 veranschaulicht wird. Figur 4 zeigt eine rein schematische Darstellung der Dreh-Schwenkeinheit (13) und des Sensors (9) anhand der das mathematische Vorgehen erläutert wird. Ein derartiger Sensor ist beispielsweise bei der Firma Perceptron erhältlich. Für die äußere Signalverarbeitung sind dann die Position und die räumliche Orientierung des Sensors (9) die Grundlage. Außerdem wird ferner vorausgesetzt, daß für die Dreh-Schwenkeinheit mit den zwei Drehachsen $(a_a$ und $a_b)$ bereits eine Einbaukalibrierung vorgenommen wurde, wie dies im US-Patent 4,888,877 und dem korrespondierenden Europäischen Patent 0 317 967 detailliert beschrieben ist, so daß also in Abhängigkeit von der Drehstellung der Dreh-Schwenkeinheit die Lage der Punkte (AB und BA) bekannt sind, die jeweils durch den Schnittpunkt der Abstandsgeraden zwischen den Drehachsen $(a_a$ und $a_b)$ mit den Drehachsen $(a_a$ und $a_b)$ definiert sind. Einen Ortsvektor $(p_O)$ eines auf der Werkstückoberfläche gemessenen Meßpunktes im Maschinenkoordinatensystem $(X_M,Y_M,Z_M)$ kann man als Vektorgleichung wie folgt angeben:

$$\text{Gleichung 1} \qquad p_O = p_M + p_S + M_S\, s'$$

Der Vektor $(p_M)$ stellt hierbei den Ortsvektor zum Punkt (AB) im Maschinenkoordinatensystem $(X_M,Y_M,Z_M)$ dar. Der Vektor $(p_S=(x_S,y_S,z_S))$ stellt den Vektor zwischen dem Punkt (AB) und dem Ursprung des Sensorkoordinatensystems (u,v,w) dar. Der Vektor (s') einen gemessenen Meßwert auf der Oberfläche des zu vermessenden Werkstückes im Sensorkoordinatensystem (u,v,w). Mit

$$M_S = \begin{pmatrix} m_{11} & m_{12} & m_{13} \\ m_{21} & m_{22} & m_{23} \\ m_{31} & m_{32} & m_{33} \end{pmatrix}$$

wiederum ist eine Sensormatrix bezeichnet, die die Transformation des Sensorkoordinatensystems (u,v,w) in das Maschinenkoordinatensystem $(X_M,Y_M,Z_M)$ definiert. Da der Sensor (9) nur zweidimensional mißt und damit nur zwei Sensorkoordinaten (u,v) aufweist, reduziert sich der Meßbereich auf eine fiächiges Meßfeld (20), das im Idealfall eine Ebene ist. Die Sensormatrix $(M_S)$ reduziert sich dann wie folgt:

$$M_S = \begin{pmatrix} m_{11} & m_{12} \\ m_{21} & m_{22} \\ m_{31} & m_{32} \end{pmatrix}$$

Damit über die Gleichung 1 aus einem im Sensorkoordinatensystem gemessenen Sensormeßwert (s') der Ortsvektor $(p_O)$ des auf der Werkstückoberfläche gemessenen Punktes im Maschinenkoordinatensystem berechnet werden kann, müssen also sowohl die drei Parameter $(x_S,y_S,z_S)$ des Vektors $(p_S)$ ermittelt werden, wie auch die sechs Parameter $(m_{11}...m_{32})$ der Sensormatrix $(M_S)$.

Die Ermittlung dieser neun Parameter wird nunmehr im folgenden beschrieben. Dazu wird die in Figur 2 gezeigte Kalibrierkugel (12) mit genau bekanntem Radius und genau bekanntem Mittelpunkt verwendet. Der Mittelpunkt der Kalibrierkugel (12) wird hierbei ermittelt, indem die Kalibrierkugel (12) am Meßtisch (1) des in Figur 1 gezeigten Koordinatenmeßgerät befestigt wird und mit einem tastenden Meßkopf die Kugel an einer Vielzahl von Punkten abgetastet wird. Aus den Punkten kann dann exakt der Mittelpunkt der Kalibrierkugel (12) ermittelt werden, dessen Ortsvektor im Maschinenkoordinatensystem mit ($p_K$) bezeichnet ist.

Zur Kalibrierung des optischen Sensor (9) wird danach die Dreh-Schwenkeinheit (13) mit dem optischen Sensor (9) am Meßarm (4) eingewechselt und die Kalibrierkugel (12) in einer Vielzahl von Stellungen vermessen. Für einen beliebigen Meßpunkt ($p_{O,i}$) (der Index i steht für i= 1.. Anzahl der Meßpunkte) des optischen Sensors (9) auf der Oberfläche der Kalibrierkugel (12) im Maschinenkoordinatensystem muß deshalb gelten:

$$\text{Gleichung 2:} \qquad |p_{O,i} - p_K| = r_K$$

wobei ($\mathbf{p_K}$) für den Mittelpunkt der Kalibrierkugel (12) steht und ($\mathbf{r_K}$) für den Radius der Kalibrierkugel (12). Ersetzt man ($\mathbf{p_{O,i}}$) durch den Ausdruck in Gleichung 1, so gelangt man zu folgendem Ausdruck

$$\text{Gleichung 3:} \qquad |p_M + p_S + M_S s'_i - p_K| = r_K$$

Die neun gesuchten Parameter können nun für eine feste Winkelstellung der Drehgelenke (6,7,8) relativ einfach ermittelt werden, indem das Gaußsche Ausgleichsverfahren der minimalen Fehlerquadrate angewandt wird. Der Fehler ($f_i$) für einen gemessenen Meßpunkt ergibt sich hierbei wie folgt:

$$\text{Gleichung 4:} \qquad f_i = |p_{O,i} - p_K| - r_K = |p_M + p_S + M_S s'_i - p_K| - r_K$$

Die Bedingung der minimalen Fehlerquadrate lautet also:

$$\text{Gleichung 5:} \qquad \sum_{i=1}^{n} f_i^2 = \sum_{i=1}^{n} \left( |\, \mathbf{p_M} + \mathbf{p_S} + \mathbf{M_S s'_i} - \mathbf{p_K} \,| - r_K \right)^2 = \text{Min}$$

Nimmt man nun über die Oberfläche der Kalibrierkugel (12) verteilt eine Vielzahl von Meßpunkten ($s'_i$) auf, so kann man diese Bedingungsgleichung nach den heute üblichen iterativen Verfahren lösen, wie beispielsweise Newton Raphson. Hieraus ergeben sich dann die gesuchten Parameter für die Sensormatrix ($M_S$) und für den Vektor ($p_S$), so daß nunmehr über die Gleichung 1 beliebige Meßpunkte (s') des optischen Meßsensors (9) in das Maschinenkoordinatensystem transformiert werden können.

Die bestimmten Parameter gelten jedoch nur für eine einzige Stellung der Dreh-Schwenkeinheit (13). Sobald jedoch nur eines der Drehgelenke (6,7,8) der Dreh-Schwenkeinheit (13) verstellt wird, muß die oben genannte Kalibrierung für die betreffende Drehstellung erneut durchgeführt werden. Zur Lösung dieses Problems wurde bereits für eine Dreh-Schwenkeinheit mit zwei aufeinander senkrecht stehenden Drehachsen in der US 4,888,877 und der EP 0 317 967 B1 vorgeschlagen, die Dreh-Schwenkeinheit mit Drehgelenken auszustatten, die reproduzierbar unterschiedliche Drehstellungen einnehmen können und der Dreh-Schwenkeinheit Korrekturwerte zuzuordnen, die die Lage der Drehachsen zueinander und/oder Winkelpositionsabweichungen und/oder Laufabweichungen der Achsen zueinander beschreiben. Nachdem die Korrekturwerte aufgenommen wurden kann dann jedes der Drehgelenke in eine beliebige Stellung gebracht werden, wobei über die Korrekturwerte für jede Drehstellung der Drehgelenke die Meßwerte des Sensors entsprechend in das Maschinenkoordinatensystem transformiert werden.

Das aus den genannten Patenten bekannte Verfahren kann problemlos für eine dritte Drehachse, wie die Drehachse ($a_c$) erweitert werden. Dazu muß lediglich die Lage der dritten Drehachse ($a_c$) ermittelt werden. Die Schnittpunkte der Abstandsgeraden zwischen den Drehachsen ($a_b$ und $a_c$) mit den Drehachsen ($a_b$ und $a_c$) definieren die Punkte (BC) und (CB). Für eine Dreh-Schwenkeinheit (13) mit weitgehend fehlerfreien Drehgelenken, bei denen als einziger Fehler die Lage der Drehachsen zueinander korrigiert wird, ergibt sich der Ortsvektor ($\mathbf{p_O}$) eines Meßpunktes auf der Werkstückoberfläche wie folgt:

$$\text{Gleichung 6:} \qquad \mathbf{p_O} = \mathbf{p_M} + \left\{ \mathbf{T_A^{-1} R_A} \left[ \mathbf{T_{AB}^{-1} R_B} \left( \mathbf{T_{BC}^{-1} R_C} \left( \mathbf{d_s} + \mathbf{M_S^* s'} \right) + \mathbf{d_c} \right) \right] + \mathbf{d_B} \right\}$$

Hierin bedeuten :

$\mathbf{T}_A^{-1}$ : die invertierte Transformationsmatrix zur Transformation des Koordinatensystems der Drehachse ($a_a$) in das

Maschinenkoordinatensystem

$R_A$: die Rotationsmatrix, die die Rotation des Drehgelenkes (6) um seine Drehachse ($a_a$) beschreibt

$T_{AB}$ : die invertierte Transformationsmatrix zur Transformation des Koordinatensystems der Drehachse ($a_b$) in das Koordinatensystem der Drehachse ($a_a$)

$R_B$: die Rotationsmatrix, die die Rotation des Drehgelenkes (7) um seine Drehachse ($a_b$) beschreibt

$T_{BC}$ : die invertierte Transformationsmatrix zur Transformation des Koordinatensystems der Drehachse ($a_c$) in das Koordinatensystem der Drehachse ($a_b$)

$R_C$: die Rotationsmatrix die die Rotation des Drehgelenkes (8) um seine Drehachse ($a_c$) beschreibt

$d_B$: den Abstandsvektor vom Punkt (AB) zum Punkt (BA)

$d_C$: den Abstandsvektor vom Punkt (BA) zum Punkt (CB)

$d_S$: den Abstandsvektor vom Punkt (CB) zum Ursprung des Sensorkoordinatensystems (u,v,w)

$M_S$ : die Sensormatrix in den Koordinaten der Drehachse ($a_c$)

s' : Vektor eines gemessenen Meßpunktes in Sensorkoordinaten {u,v,w}

Im Fall von weitgehend fehlerfreien Drehgelenken ist deren Bewegung eine reine Rotation und es gilt für die Rotationsmatrizen ($R_A$) und ($R_B$) und ($R_C$) für die Drehung um die Z-Achse des jeweiligen Gelenkkoordinatensystems.

$$\text{Gleichung 7} \qquad R_A = R_B = R_C = \begin{pmatrix} \cos\varphi & -\sin\varphi & 0 \\ \sin\varphi & \cos\varphi & 0 \\ 0 & 0 & 1 \end{pmatrix}$$

In dieser Gleichung 7 bezeichnet ($\varphi$) hierbei den Drehwinkel um das jeweilige Drehgelenk (6,7,8). Für die Rotationsmatrix ($R_A$) ist es der Drehwinkel ($\varphi_A$) des Drehgelenkes (6), für die Rotationsmatrix ($R_B$) ist es der Drehwinkel ($\varphi_B$) des Drehgelenkes (7) und für die Rotationsmatrix ($R_C$) ist es der Drehwinkel ($\varphi_C$) des Drehgelenkes (8).

Alle weiteren Vektoren und Matrizen sind auch im Fall idealer Drehgelenke unbekannt und müssen experimentell bestimmt werden. Dazu kommen als weitere Unbekannte die Nullwinkel der beiden Winkelmeßsysteme. Demgemäß sind für die Kalibrierung der Dreh-Schwenkeinheit Messungen für ausreichend unabhängige Bedingungsgleichungen durchzuführen. Das ist auch dann noch der Fall, wenn die Korrektur der einzelnen Drehgelenke bekannt ist.

Diese Gleichung 6 entspricht hierbei weitestgehend der Gleichung I des US-Patentes 4,888,877 und dem korrespondierenden Europäischen Patent 0 317 967 wobei diese zusätzlich um die Therme für die dritte Drehachse ($a_c$) erweitert wurde und die Gleichung lediglich etwas anders mathematisch beschrieben ist.

In dieser Gleichung 7 sind in dem hier beschriebenen Ausführungsbeispiel neben den ohnehin bekannten Matrizen ($R_A$, $R_B$, $R_C$) die Matrizen ($T_{AB}$) sowie ($T_{BC}$), sowie die Vektoren ($p_M$) und ($d_b$) bereits bekannt, da für die Drehgelenke (6 und 7) der Dreh-Schwenkeinheit (13), wie oben bereits ausgeführt, gemäß dem Vorgehen des US-Patentes 4,888,877 und dem korrespondierenden Europäischen Patent 0 317 967 die entsprechenden Korrekturparameter bestimmt wurden.

Mit angebautem dritten Drehgelenk (8) und Sensor (9) müssen mithin nur noch die Parameter der Matrizen ($T_{BC}$, $M_S$) und der Vektoren ($d_c$) und ($d_s$), sowie der Nullwinkel des Drehgelenkes (8) bestimmt werden, wobei zwischen der Matrix ($M_S$) und der Matrix ($M_s$) folgender Zusammenhang besteht:

$$M_S = T_A^{-1} R_A * T_{AB}^{-1} R_B * T_{BC}^{-1} R_C * M_S^*$$

Wie diese fehlenden Parameter im einzelnen aufgenommen werden, soll nunmehr erläutert werden, wobei es zwei grundsätzliche Lösungswege gibt. Es sind dies eine Lösung nach der Methode des Fehlerquadratminimums der Abweichungen an der Kalibrierkugel und eine zweistufige Lösung mit Kalibrierung der Sensorparameter, wie vorstehend beschrieben, und anschließender Bestimmung sämtlicher Parameter für das Drehgelenk (8).

Um die restlichen benötigten Korrekturwerte aufzunehmen sollte zunächst die Lage der Drehachse ($a_c$) des Drehgelenkes (8) bestimmt werden. Wenn die Lage der Drehachse ($a_c$) erst bekannt ist, kann eine Abstandsgerade zwischen den Drehachsen ($a_b$ und $a_c$) berechnet werden, wobei die Schnittpunkte dieser Abstandsgeraden mit den Drehachsen ($a_b$ und $a_c$) die Punkte (BC) und (CB) bestimmt. Hierüber ist aber der Vektor ($d_c$) definiert, der sich als Abstandsvektor zwischen den Punkten (BA) und (CB) ergibt. Wenn der Vektor ($d_c$) erst bekannt ist, können durch Aufnahme einer Vielzahl von unabhängigen Bestimmungsgleichungen wie üblich mittels einem numerischen Verfahren, wie beispielsweise das Verfahren der kleinsten Fehlerquadrate nach Gauß die restlichen Parameter der Gleichung 6 bestimmt werden.

Die Lage der Drehachse ($a_c$) könnte hierbei analog bestimmt werden, wie dies im US-Patent 4,888,877 und dem korrespondierenden Europäischen Patent 0 317 967 im Zusammenhang mit der Figur 7 für die beiden Drehachsen der hierin gezeigten Dreh-Schwenkeinheit beschrieben ist, indem anstelle des Sensors (9) eine von der Drehachse ($a_c$) beabstandet angeordnete Kugel am Drehgelenk (8) befestigt wird und das Drehgelenk in eine Vielzahl von Drehstellungen gebracht wird, wobei dann für jede der Drehstellungen der jeweilige Mittelpunkt der Kugel gemessen wird und aus den gemessenen Kugelmittelpunkten ein Ausgleichskreis besteingepaßt wird. Die Drehachse ergibt sich dann als eine Gerade senkrecht durch den Mittelpunkt des Ausgleichskreises. Dies hat mehrere Nachteile. Zum einen muß extra zur Aufnahme dieser Korrekturwerte anstelle des Sensors (9) eine entsprechende Kugel am Drehgelenk (8) befestigt werden. Des weiteren muß die gesamte Dreh-Schwenkeinheit (13) auf einem gesonderten Meßgerät aufgespannt werden, auf dem dann die einzelnen Mittelpunkte der Kugel für die einzelnen Drehstellungen bestimmt wird.

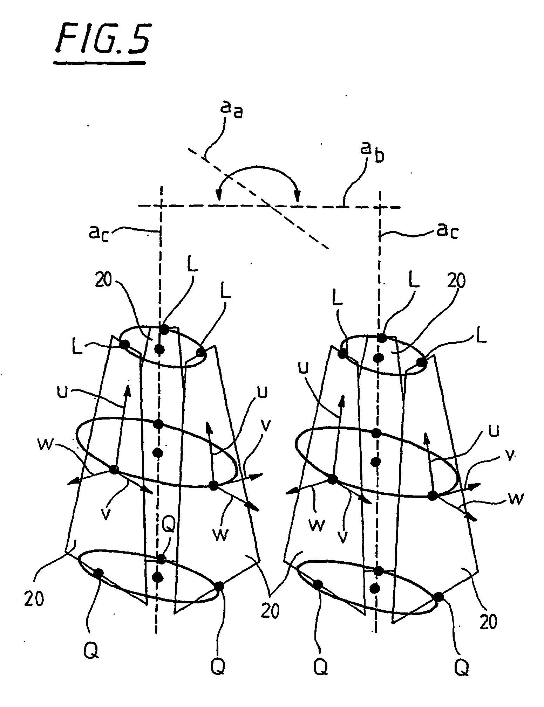

Eine erhebliche Vereinfachung ergibt sich deshalb, wenn die Lage der Drehachse ($a_c$) erfindungsgemäß mit dem messenden Sensor (9) selbst bestimmt wird. Wie dies im einzelnen durchgeführt wird, wird nachfolgend im Zusammenhang mit Figur 4 und 5 erläutert werden.

Nach dem ersten Kalibrierverfahren sind für wenigstens zwei Drehstellungen j =1 .. m (m≥2) der Achse ($a_C$) des Drehgelenkes (8) an hinreichend vielen Positionen (i = 1.. n) des Sensormeßbereiches Meßpunkte ($p_O$) an der Kugel aufzunehmen. Alle diese Punkte müssen der Grundgleichung genügen

$$|p_{O,j,i} - p_K| = r_K$$

Die gesuchten Parameter ($T_{BC}$, $d_S$, $M_S^*$, $d_C$) für die Achse ($a_C$) einschließlich des Sensors ergeben sich dann aus der folgenden, in diesem Falle sehr umfangreichen, Gleichung für das Fehlerquadratminimum, die in bekannter Weise, beispielsweise. mittels Newton-Raphson, zu lösen ist

$$\sum_j \sum_i f_{j,i} = \sum_j \sum_i \left( \left| p_M - p_K + T_A^{-1} R_A \left\{ T_{AB}^{-1} R_B \left[ T_{BC}^{-1} R_{C,j} \left( d_S + M_S^* s'_{j,i} \right) + d_C \right] + d_B \right\} \right| - r_K \right)^2 \Rightarrow Min$$

Mathematisch und numerisch einfacher ist das zweite Lösungsverfahren, bei dem im ersten Schritt für wenigstens zwei, zweckmäßig jedoch drei oder mehr Drehstellungen des Drehgelenkes (8) bzw. der Drehachse ($a_C$), die sich vorzugsweise gleichmäßig über den gesamten Drehbereich des Drehgelenkes (8) verteilen, eine Kalibrierung des Sensors (9), wie dies entweder oben beschrieben ist oder wie dies auch in der DE 196 18 283 A1 beschrieben ist, durchgeführt werden, bei der für jede der Drehstellungen die Parameter der Sensormatrix ($M_S$) berechnet werden, die die Transformation des Sensorkoordinatensystems in das Maschinenkoordinatensystem beschreibt und Parameter des Vektors ($p_S$) berechnet werden, der die Ablage des Ursprunges des Sensorkoordinatensystems (u,v,w) gegenüber dem Punkt (AB) im Maschinenkoordinatensystem beschreibt Aus den ermittelten Vektoren ($p_S$) könnte bereits nach dem Modell des US-Patentes 4,888,877 und des korrespondierenden Europäischen Patentes 0 317 967 ein Ausgleichskreis ermittelt werden und hieraus die Lage der Drehachse ($a_C$). Dies würde jedoch im Falle, dass der Sensornullpunkt sehr nahe an der Drehachse $a_C$ liegt und angesichts der unvermeidlichen Meßungenauigkeit des Sensors (9) zu erheblichen Unsicherheiten führen. Besonders vorteilhaft wird man bei der Berechnung der Lage der Achse ($a_c$) zusätzlich auch die Sensormatrix ($M_S$) einbeziehen, da diese die Ausrichtung des Sensorkoordinatensystems definiert. Man könnte beispielsweise für zwei virtuelle Meßpunkte (L, Q) im Sensorkoordinatensystem (u,v,w) am Rande des Meßfeldes (20) für jede der drei Drehstellungen analog einen Ausgleichskreis berechnen und durch die entsprechenden Mittelpunkte der drei Ausgleichskreise eine besteingepaßte Gerade legen, die dann die Drehachse ($a_c$) definiert.

Noch wesentlich genauer ergibt sich die gesuchte Achsrichtung aus den vorher bestimmten Sensormatrizen selbst, indem für zwei beliebige Winkelkombinationen aus den beteiligten Sensormatrizen ($M_{si}$ und $M_{Sj}$) die zugehörige Roationsmatrix ($R_{ij} = M_{Si} M_{Sj}^{-1}$) gebildet und der Achsvektor als Eigenvektor der Matrix ($R_{ij}$) berechnet wird. Im Falle von (m>2) Drehstellungen der Achse ($a_C$) ergeben sich aus den (m(m-1)/2) möglichen Zweierkombinationen von Sensormatrizen die zugehörigen Roationsmatrizen ($R_{ij}$), aus denen der gesuchte Achsrichtungsvektor als mittlerer Eigenvektor nach einem bekannten Quadratmittel-Verfahren (z. B. Householder) berechnet werden kann.

Besonders vorteilhaft werden zur Aufnahme der Korrekturwerte die Drehgelenke (6 und 7) nach Möglichkeit in eine Stellung gebracht, so daß sich das Drehgelenk (8) möglichst wenig durchbiegt. Dies ist in diesem speziellen Ausführungsbeispiel dann der Fall, wenn die Drehachse ($a_b$) horizontal ausgerichtet ist und die Drehachse ($a_c$) vertikal, wie dies Figur 5 zeigt. Besonders vorteilhaft ist es zusätzlich, wenn das Drehgelenk (6) mit der horizontal ausgerichteten Drehachse ($a_a$) zusätzlich in eine um 180° gedrehte Stellung gebracht wird und in dieser Stellung erneut Kalibrierungen wie eben beschrieben in den mindestens zwei Drehstellungen des Drehgelenkes (8) vorgenommen werden.

Obwohl dies vollkommen klar ist, sei der Vollständigkeit halber angemerkt, daß die besagten drei Drehstellungen bei einem Drehbereich des Drehgelenkes (8) von 360° jeweils um 120° versetzt sind.

Nachdem nunmehr die Lage der Drehachse ($a_c$) berechnet ist, lassen sich hierdurch die Punkte (BC und CB) und somit auch die Vektoren ($d_c$ und $d_s$) berechnen. Außerdem ist aus der Kalibrierung die Sensormatrix ($M_S$ bzw. $M_S$*) bekannt. Außerdem können über ein numerisches Berechnungsverfahren, wie z.B. das Verfahren der kleinsten Fehlerquadrate nach Gauß, mittels der bei der Kalibrierung aufgenommenen Meßwerte die Parameter der Transformationsmatrix (T) berechnet werden.

Somit stehen nun sämtliche unbekannten Parameter zur Verfügung mit denen die Lage der Drehachsen korrigiert werden kann.

Neben der Korrektur der Lage der Drehachsen kann es auch zusätzlich Sinn machen Winkelpositionsabweichungen und/oder Laufabweichungen in den Drehachsen zu korrigieren. Die Korrektur kann hierbei ganz genauso erfolgen, wie die im US-Patent 4,888,877 und dem korrespondierenden Europäischen Patent 0.317 967 im Zusammenhang mit der hierin enthaltenen Figur 8 beschrieben ist, indem anstelle des Sensors (9) eine Platte mit vier Kugeln am Drehgelenk (8) befestigt wird und die Platte über das Drehgelenk (8) in eine Vielzahl von Drehstellungen verdreht wird, wobei für jede der Kugeln der Mittelpunkt gemessen wird und über die Mittelpunkte gemäß dem aus der Deutschen Offenlegungsschrift DE-A-36 37 410 bekannten "Verfahren zur Messung von Drehtischabweichungen" Korrekturparameter für Winkelpositionsabweichungen und/oder Laufabweichungen in den Drehgelenken bestimmt werden.

**Patentansprüche**

1. Verfahren zur Kalibrierung eines in wenigstens einer Dimension messenden Sensors (9) an einem Koordinatenmeßgerät, **gekennzeichnet durch** folgende Verfahrensschritte:

   - Bereitstellen einer Kalibrierkugel (12) mit bekanntem Radius ($r_K$) im Meßraum des Koordinatenmeßgerätes und bestimmen des Mittelpunktes ($p_K$) der Kalibrierkugel (12) im Maschinenkoordinatensystem ($X_M, Y_M, Z_M$)
   - messen von Punkten ($p_{O,i}$) auf der Oberfläche der Kalibrierkugel (12) mit dem zu kalibrierenden Sensor (9), wobei in wenigstens einer vom Sensor meßbaren Dimension (u,v) Meßwerte ($s'_i$) über weite Bereiche des Meßbereiches (20) aufgenommen werden
   - ermitteln von Parametern eines ersten Parameterfeldes ($M_S$) das die Transformation des Sensorkoordinatensystems (u,v,w) in das Maschinenkoordinatensystem ($X_M, Y_M, Z_M$) beschreibt und eines zweiten Parameterfeldes ($p_S$), das die Ablage des Sensorkoordinatensystems (u,v,w) gegenüber einem Punkt (AB) im Maschinenkoordinatensystem ($X_M, Y_M, Z_M$) beschreibt, für den Sensor aus den Meßwerten ($s'_i$) unter der Berücksichtigung daß der Mittelpunkt ($p_K$) und der Radius ($r_K$) der Kalibrierkugel (12) als bekannt vorausgesetzt wird.

2. Verfahren nach Anspruch 1, **dadurch gekennzeichnet, daß** die Parameter der Parameterfelder ($M_S$, $p_S$) unter Ausnutzung folgender Beziehung bestimmt werden,

$$|p_{O,i} - p_K| = r_K$$

   wobei hierin bedeuten:

   $p_{O,i}$ : ein Meßpunkt auf der Oberfläche der Kalibrierkugel
   $p_K$ : der Mittelpunkt der Kalibrierkugel
   $r_K$ : der Radius der Kalibrierkugel

   und wobei in der Beziehung der Mittelpunkt ($p_K$) der Kalibrierkugel und der Radius der Kalibrierkugel als bekannt vorausgesetzt werden.

3. Verfahren nach Anspruch 2, wobei die Parameter der Parameterfelder ($M_S$, $p_S$) unter nachfolgender Beziehung bestimmt werden:

$$|p_M + p_S + M_S s' - p_K| = r_K.$$

   wobei hierin bedeuten:

   $p_K$ : Vektor zum Mittelpunkt der Kalibrierkugel im Maschinenkoordinatensystem

$r_K$ :der Radius der Kalibrierkugel

$p_M$ : Vektor vom Ursprung des Maschinenkoordinatensystems ($X_M,Y_M,Z_M$) zu einem Punkt (AB) im Meßarm des Koordinatenmeßgerätes an dem der Sensor (9) befestigt ist

**$p_S$**: Vektor vom Punkt (AB) im Meßarm des Koordinatenmeßgerätes zum Ursprung des Sensorkoordinatensystems (u,v,w)

**s'**: Vektor eines im Sensorkoordinatensystem (u,v,w) gemessenen Meßpunktes auf der Oberfläche der Kalibrierkugel

$M_S$: Parameterfeld (Sensormatrix), das die Transformation des Sensorkoordinatensystems (u,v,w) in das Maschinenkoordinatensystem ($X_M,Y_M,Z_M$) angibt

4. Verfahren nach einem der Ansprüche 1 bis 3 , **dadurch gekennzeichnet, daß** als Sensor (9) ein optischer Sensor verwendet wird.

5. Verfahren nach Anspruch 4, **dadurch gekennzeichnet, daß** der optische Sensor ein zweidimensional messender optischer Triangulationssensor ist.

6. Verfahren nach einem der Ansprüche 1-5, **dadurch gekennzeichnet, daß** bei der Kalibrierung Meßwerte gemessen werden, die sich weitgehend gleichmäßig über den Meßbereich (20) des Sensors verteilen.

7. Verfahren nach Anspruch 1, **dadurch gekennzeichnet, daß** die Kugeloberfläche der Kalibrierkugel an einer Vielzahl von Stellen gemessen wird.

8. Koordinatenmeßgerät umfassend einen in wenigstens einer Dimension messenden Sensor (9), der von einer Mechanik (24) des Koordinatenmeßgerätes in den drei Koordinatenrichtungen verfahren werden kann, und eine Steuer- und Auswerteeinheit (23), mit der Meßabläufe durchgeführt und ausgewertet werden können, wobei mit der Steuer- und Auswerteeinheit (23) folgendes Verfahren ausgeführt wird:

   - Bestimmen des Mittelpunktes einer Kalibrierkugel (12) im Maschinenkoordinatensystem deren Radius bekannt ist
   - messen von Punkten auf der Oberfläche der Kalibrierkugel (12) mit dem zu kalibrierenden Sensor (9), wobei in wenigstens einer vom Sensor meßbaren Dimension (u,v) Meßwerte ($s'_i$) über weite Teile des Meßbereiches (20) aufgenommen werden
   - ermitteln von Parametern eines ersten Parameterfeldes ($M_S$) aus den Meßwerten ($s'_i$), das die Transformation des Sensorkoordinatensystems (u,v,w) in das Maschinenkoordinatensystem ($X_M,Y_M,Z_M$) angibt und eines zweiten Parameterfeldes ($p_S$) aus den Meßwerten ($s'_i$), das die Ablage des Sensorkoordinatensystems (u,v,w) gegenüber einem Punkt (AB) im Maschinenkoordinatensystem ($X_M,Y_M,Z_M$) angibt, wobei der Mittelpunkt ($p_K$) und der Radius ($r_K$) der Kalibrierkugel als bekannt vorausgesetzt werden.

9. Koordinatenmeßgerät nach Anspruch 8, **dadurch gekennzeichnet, daß** die Steuer- und Auswerteeinheit die Parameter des Parameterfeldes ($M_S$) unter Ausnutzung folgender Beziehung bestimmt:

$$|p_{O,i} - p_K| = r_K$$

wobei hierin bedeuten:

$p_{O,i}$ :ein Meßpunkt auf der Oberfläche der Kalibrierkugel
$p_K$ :der Mittelpunkt der Kalibrierkugel
$r_K$ :der Radius der Kalibrierkugel

und wobei in der Beziehung der Mittelpunkt ($p_K$) der Kalibrierkugel und der Radius der Kalibrierkugel als bekannt vorausgesetzt werden.

10. Koordinatenmeßgerät nach Anspruch 9, **dadurch gekennzeichnet, daß** die Steuer- und Auswerteeinheit die Parameter des Parameterfeldes ($M_S$) unter nachfolgender Beziehung bestimmt:

$$|p_M + p_S + M_S s' - p_K| = r_K$$

wobei hierin bedeuten:

$p_K$ :Vektor zum Mittelpunkt der Kalibrierkugel im Maschinenkoordinatensystem

$r_K$ :der Radius der Kalibrierkugel

$p_M$ : Vektor vom Ursprung des Maschinenkoordinatensystems zu einem Punkt (AB) im Meßarm des Koordinatenmeßgerätes an dem der Sensor (9) befestigt ist

$p_S$: Vektor vom Punkt (AB) im Meßarm des Koordinatenmeßgerätes zum Ursprung des Sensorkoordinatensystems (u,v,w)

s' : Vektor eines im Sensorkoordinatensystem (u,v,w) gemessenen Meßpunktes auf der Oberfläche der Kalibrierkugel

$M_S$: Parameterfeld (Sensormatrix), das die Transformation des Sensorkoordinatensystems (u,v,w) in das Maschinenkoordinatensystem $(X_M,Y_M,Z_M)$ angibt

**11.** Koordinatenmeßgerät nach einem der Ansprüche 8-10, **dadurch gekennzeichnet, daß** als Sensor (9) ein optischer Sensor verwendet wird.

**12.** Koordinatenmeßgerät nach Anspruch 11, **dadurch gekennzeichnet, daß** der optische Sensor ein zweidimensional messender optischer Triangulationssensor ist.

**13.** Koordinatenmeßgerät nach einem der Ansprüche 8-12, **dadurch gekennzeichnet, daß** die Steuer- und Auswerteinheit bei der Kalibrierung Meßwerte mißt, die sich weitgehend gleichmäßig über den Meßbereich (20) des Sensors verteilen.

**14.** Koordinatenmeßgerät nach einem der Ansprüche 8-13, **dadurch gekennzeichnet, daß** die Steuer- und Auswerteinheit die Kugeloberfläche der Kalibrierkugel an einer Vielzahl von Stellen mißt.

**Claims**

**1.** Method for calibrating a sensor (9), measuring in at least one dimension, on a coordinate measuring machine, **characterized by** the following method steps:

- providing a calibration ball (12) of known radius ($r_K$) in the measuring space of the coordinate measuring machine, and determining the centre ($\mathbf{p}_K$) of the calibration ball (12) in the machine coordinate system ($X_M$, $Y_M$, $Z_M$),
- measuring points ($\mathbf{p}_{O,i}$) on the surface of the calibration ball (12) with the aid of the sensor (9) to be calibrated, measured values ($\mathbf{s}'_i$) being recorded over wide areas of the measuring range (20) in at least one dimension (u,v) which can be measured by the sensor, and
- determining parameters of a first parameter field ($\mathbf{M}_S$) which describes the transformation of the sensor coordinate system (u,v,w) into the machine coordinate system ($X_M$, $Y_M$, $Z_M$), and using the measured values ($\mathbf{s}'_i$) to determine for the sensor a second parameter field ($\mathbf{p}_s$), which describes the offset of the sensor coordinate system (u,v,w) with reference to a point (AB) in the machine coordinate system ($X_M$, $Y_M$, $Z_M$), this being done on the assumption that the centre ($\mathbf{p}_K$) and the radius ($r_K$) of the calibration ball (12) are known.

**2.** Method according to Claim 1, **characterized in that** the parameters of parameter fields ($\mathbf{M}_S$, $\mathbf{p}_S$) are determined by utilizing the following relationship:

$$|p_{O,i} - p_K| = r_K$$

wherein:

$\mathbf{p}_{O,i}$ signifies a measuring point on the surface of the calibration ball,

$\mathbf{p}_K$ signifies the centre of the calibration ball,

$r_K$ signifies the radius of the calibration ball,

and the centre ($\mathbf{p}_K$) of the calibration ball and the radius of the calibration ball being assumed as known in the relationship.

3. Method according to Claim 2, in which the parameters of the parameter fields ($\mathbf{M}_S$, $\mathbf{p}_S$) are determined using the following relationship:

$$|p_M + p_S + M_S s' - p_K| = r_K$$

wherein:

$\mathbf{p}_K$ signifies a vector to the centre of the calibration ball in the machine coordinate system,

$r_K$ signifies the radius of the calibration ball,

$\mathbf{p}_M$ signifies a vector from the origin of the machine coordinate system ($X_M$, $Y_M$, $Z_M$) to a point (AB) in the measuring arm of the coordinate measuring machine on which the sensor (9) is fastened,

$\mathbf{p}_S$ signifies a vector from the point (AB) in the measuring arm of the coordinate measuring machine to the origin of the sensor coordinate system (u,v,w),

$s'$ signifies a vector of a measuring point, measured in the sensor coordinate system (u,v,w), on the surface of the calibration ball, and

$\mathbf{M}_S$ signifies a parameter field (sensor matrix) which specifies the transformation of the sensor coordinate system (u,v,w) into the machine coordinate system ($X_M$, $Y_M$, $Z_M$).

4. Method according to one of Claims 1 to 3, **characterized in that** an optical sensor is used as sensor (9).

5. Method according to Claim 4, **characterized in that** the optical sensor is an optical triangulation sensor measuring in two dimensions.

6. Method according to one of Claims 1-5, **characterized in that** measured values which are distributed largely uniformly over the measuring range (20) of the sensor are measured during the calibration.

7. Method according to Claim 1, **characterized in that** the surface of the calibration ball is measured at a multiplicity of points.

8. Coordinate measuring machine comprising a sensor (9) which measures in at least one dimension and can be moved in the three coordinate directions by a mechanism (24) of the coordinate measuring machine, and a control and evaluation unit (23) which can be used to carry out and evaluate measuring cycles, the following method being executed with the aid of the control and evaluation unit (23):

- determining in the machine coordinate system the centre of the calibration ball (12) whose radius is known,
- measuring points on the surface of the calibration ball (12) with the aid of the sensor (9) to be calibrated, measured values ($\mathbf{s'}_i$) being recorded over wide areas of the measuring range (20) in at least one dimension (u,v) which can be measured by the sensor, and
- determining from the measured values ($\mathbf{s'}_i$), parameters of a first parameter field ($\mathbf{M}_S$) which specifies the transformation of the sensor coordinate system (u,v,w) into the machine coordinate system ($X_M$, $Y_M$, $Z_M$), and determining from the measured values ($\mathbf{s'}_i$), a second parameter field ($\mathbf{p}_S$) which specifies the offset of the sensor coordinate system (u,v,w) with reference to a point (AB) in the machine coordinate system ($X_M$, $Y_M$, $Z_M$), the centre ($\mathbf{p}_K$) and the radius ($r_K$) of the calibration ball being assumed as known.

9. Coordinate measuring machine according to Claim 8, **characterized in that** the control and evaluation unit determines the parameters of the parameter field ($\mathbf{M}_S$) by utilizing the following relationship:

$$|p_{O,i} - p_K| = r_K$$

wherein:

$\mathbf{p}_{O,i}$ signifies a measuring point on the surface of the calibration ball,

$\mathbf{p}_K$ signifies the centre of the calibration ball,

$r_K$ signifies the radius of the calibration ball,

and the centre ($\mathbf{p}_K$) of the calibration ball and the radius of the calibration ball being assumed as known in the relationship.

10. Coordinate measuring machine according to Claim 9, **characterized in that** the control and evaluation unit determines the parameters of the parameter field ($M_S$) using the following relationship:

$$|p_M + p_S + M_S s' - p_K| = r_K$$

wherein:

$p_K$ signifies a vector to the centre of the calibration ball in the machine coordinate system,
$r_K$ signifies the radius of the calibration ball,
$p_M$ signifies a vector from the origin of the machine coordinate system to a point (AB) in the measuring arm of the coordinate measuring machine on which the sensor (9) is fastened,
$p_S$ signifies a vector from the point (AB) in the measuring arm of the coordinate measuring machine to the origin of the sensor coordinate system (u,v,w),
$s'$ signifies a vector of a measuring point, measured in the sensor coordinate system (u,v,w), on the surface of the calibration ball, and
$M_S$ signifies a parameter field (sensor matrix) which specifies a transformation of the sensor coordinate system (u,v,w) into the machine coordinate system ($X_M$, $Y_M$, $Z_M$).

11. Coordinate measuring machine according to one of Claims 8-10, **characterized in that** an optical sensor is used as sensor (9).

12. Coordinate measuring machine according to Claim 11, **characterized in that** the optical sensor is an optical triangulation sensor measuring in two dimensions.

13. Coordinate measuring machine according to one of Claims 8-12, **characterized in that** measured values which are distributed largely uniformly over the measuring range (20) of the sensor are measured, during the calibration, by the control and evaluation unit.

14. Coordinate measuring machine according to one of Claims 8-13, **characterized in that** the control and evaluation unit measures the surface of the calibration ball at a multiplicity of points.

**Revendications**

1. Procédé de calibrage d'un capteur (9) mesurant dans au moins une dimension sur un appareil de mesure de coordonnées, **caractérisé par** les étapes suivantes :

   - mise à disposition d'une bille calibrée (12) de rayon ($r_K$) connu dans l'espace de mesure de l'appareil de mesure de coordonnées et détermination du point central ($p_K$) de la bille calibrée (12) dans le système de coordonnées de la machine ($X_M$, $Y_M$, $Z_M$),
   - mesure de points ($p_{o,i}$) sur la surface de la bille calibrée (12) avec le capteur (9) à calibrer, des valeurs mesurées ($s'_i$) étant relevées sur de larges zones de la zone de mesure (20) dans au moins une dimension (u, v) mesurable par le capteur,
   - détermination des paramètres d'un premier champ de paramètres ($M_S$) qui décrit la transformation du système de coordonnées du capteur (u, v, w) en le système de coordonnées de la machine ($X_M$, $Y_M$, $Z_M$) et d'un deuxième champ de paramètres ($p_s$) qui décrit l'écart du système de coordonnées du capteur (u, v, w) par rapport à un point (AB) dans le système de coordonnées de la machine ($X_M$, $Y_M$, $Z_M$) pour le capteur à partir des valeurs mesurées ($s'_i$) en tenant compte du fait que le point central ($p_K$) et le rayon ($r_K$) de la bille calibrée (12) sont supposés connus.

2. Procédé selon la revendication 1, **caractérisé en ce que** les paramètres des champs de paramètres ($M_s$, $p_s$) sont déterminés en utilisant l'équation suivante :

$$|p_{o,i} - p_K| = r_K$$

où :

$p_{o,i}$ désigne un point mesuré sur la surface de la bille calibrée,
$p_K$ désigne le point central de la bille calibrée
$r_K$ désigne le rayon de la bille calibrée

et le point central ($p_K$) de la bille calibrée et le rayon de la bille calibrée étant supposés connus dans l'équation.

**3.** Procédé selon la revendication 2, **caractérisé en ce que** les paramètres des champs de paramètres ($M_s$, $p_s$) sont déterminés selon l'équation suivante :

$$|p_M + p_s + M_s \, s' - p_K| = r_K$$

où :

$p_K$ désigne le vecteur vers le point central de la bille calibrée dans le système de coordonnées de la machine
$r_K$ désigne le rayon de la bille calibrée
$p_M$ désigne le vecteur entre l'origine du système de coordonnées de la machine ($X_M$, $Y_M$, $Z_M$) et un point (AB) dans le bras de mesure de l'appareil de mesure de coordonnées sur lequel est fixé le capteur (9)
$p_s$ désigne le vecteur entre le point (AB) dans le bras de mesure de l'appareil de mesure de coordonnées et l'origine du système de coordonnées du capteur (u, v, w)
$s'$ désigne le vecteur d'un point de mesure mesuré dans le système de coordonnées du capteur (u, v, w) sur la surface de la bille calibrée
$M_s$ désigne le champ de paramètres (matrice du capteur) qui indique la transformation du système de coordonnées du capteur (u, v, w) en le système de coordonnées de la machine ($X_M$, $Y_M$, $Z_M$).

**4.** Procédé selon l'une des revendications 1 à 3, **caractérisé en ce que** le capteur (9) utilisé est un capteur optique.

**5.** Procédé selon la revendication 4, **caractérisé en ce que** le capteur optique est un capteur à triangulation optique qui mesure dans deux dimensions.

**6.** Procédé selon l'une des revendications 1 à 5, **caractérisé en ce que** lors du calibrage, on mesure des valeurs mesurées qui sont réparties pour l'essentiel régulièrement sur la zone de mesure (20) du capteur.

**7.** Procédé selon la revendication 1, **caractérisé en ce que** la surface de bille de la bille calibrée est mesurée en une pluralité de points.

**8.** Appareil de mesure de coordonnées comprenant un capteur (9) mesurant dans au moins une dimension, lequel peut être déplacé par un mécanisme (24) de l'appareil de mesure de coordonnées dans les trois directions des coordonnées, et une unité de commande et d'évaluation (23) avec laquelle peuvent être effectuées et évaluées des opérations de mesure, le procédé suivant étant mis en oeuvre par l'unité de commande et d'évaluation (23) :

- détermination du point central d'une bille calibrée (12) dans le système de coordonnées de la machine dont le rayon est connu,
- mesure de points sur la surface de la bille calibrée (12) avec le capteur (9) à calibrer, des valeurs mesurées ($s'_i$) étant relevées sur de larges parties de la zone de mesure (20) dans au moins une dimension (u, v) mesurable par le capteur,
- détermination des paramètres d'un premier champ de paramètres ($M_S$) à partir des valeurs mesurées ($s'_i$) qui indique la transformation du système de coordonnées du capteur (u, v, w) en le système de coordonnées de la machine ($X_M$, $Y_M$, $Z_M$) et d'un deuxième champ de paramètres ($p_s$) à partir des valeurs mesurées ($s'_i$) qui indique l'écart du système de coordonnées du capteur (u, v, w) par rapport à un point (AB) dans le système de coordonnées de la machine ($X_M$, $Y_M$, $Z_M$), le point central ($p_K$) et le rayon ($r_K$) de la bille calibrée (12) étant supposés connus.

**9.** Appareil de mesure de coordonnées selon la revendication 8, **caractérisé en ce que** l'unité de commande et d'évaluation détermine les paramètres du champ de paramètres ($M_S$) en utilisant l'équation suivante :

$$|p_{o,i} - p_K| = r_K$$

où :

$p_{o,i}$ désigne un point mesuré sur la surface de la bille calibrée,
$p_K$ désigne le point central de la bille calibrée
$r_K$ désigne le rayon de la bille calibrée

et le point central ($p_K$) de la bille calibrée et le rayon de la bille calibrée étant supposés connus dans l'équation.

**10.** Appareil de mesure de coordonnées selon la revendication 9, **caractérisé en ce que** l'unité de commande et d'évaluation détermine les paramètres du champ de paramètres ($M_s$) en utilisant l'équation suivante :

$$|p_M + p_s + M_s s' - p_K| = r_K$$

où :

$p_K$ désigne le vecteur vers le point central de la bille calibrée dans le système de coordonnées de la machine
$r_K$ désigne le rayon de la bille calibrée
$p_M$ désigne le vecteur entre l'origine du système de coordonnées de la machine et un point (AB) dans le bras de mesure de l'appareil de mesure de coordonnées sur lequel est fixé le capteur (9)
$p_s$ désigne le vecteur entre le point (AB) dans le bras de mesure de l'appareil de mesure de coordonnées et l'origine du système de coordonnées du capteur (u, v, w)
s' désigne le vecteur d'un point de mesure mesuré dans le système de coordonnées du capteur (u, v, w) sur la surface de la bille calibrée
$M_s$ désigne le champ de paramètres (matrice du capteur) qui indique la transformation du système de coordonnées du capteur (u, v, w) en le système de coordonnées de la machine ($X_M$, $Y_M$, $Z_M$) .

**11.** Appareil de mesure de coordonnées selon l'une des revendications 8 à 10, **caractérisé en ce que** le capteur (9) utilisé est un capteur optique.

**12.** Appareil de mesure de coordonnées selon la revendication 11, **caractérisé en ce que** le capteur optique est un capteur à triangulation optique qui mesure dans deux dimensions.

**13.** Appareil de mesure de coordonnées selon l'une des revendications 8 à 12, **caractérisé en ce que** lors du calibrage, l'unité de commande et d'évaluation mesure des valeurs mesurées qui sont réparties pour l'essentiel régulièrement sur la zone de mesure (20) du capteur.

**14.** Appareil de mesure de coordonnées selon l'une des revendications 8 à 13, **caractérisé en ce que** l'unité de commande et d'évaluation mesure la surface de bille de la bille calibrée en une pluralité de points.

## FIG.1

FIG.2

# FIG.3

# FIG.4

# FIG.5